**Europäisches Patentamt**

**European Patent Office**

**Office européen des brevets**

(19)

(11) Numéro de publication: **0 189 345**
**B1**

(12)

# FASCICULE DE BREVET EUROPEEN

(45) Date de publication du fascicule du brevet:
**18.10.89**

(21) Numéro de dépôt: **86400067.4**

(22) Date de dépôt: **14.01.86**

(51) Int. Cl.⁴: **B 32 B 17/10,** C 03 C 27/12,
B 30 B 1/00

(54) **Dispositif pour assembler par calandrage au moins une feuille de verre et au moins une pellicule de matière plastique.**

(30) Priorité: **19.01.85 DE 3501631**

(43) Date de publication de la demande:
**30.07.86 Bulletin 86/31**

(45) Mention de la délivrance du brevet:
**18.10.89 Bulletin 89/42**

(84) Etats contractants désignés:
**BE DE FR GB IT SE**

(56) Documents cités:
EP-A- 0 015 209
DE-C- 937 012
FR-A- 1 446 147
FR-A- 2 441 089
GB-A- 756 452
US-A- 2 363 779
US-A- 2 983 635
US-A- 4 079 617
US-A- 4 269 114

(73) Titulaire: **SAINT-GOBAIN VITRAGE, "Les
Miroirs" 18, avenue d'Alsace, F-92400 Courbevoie (FR)**

(84) Etats contractants désignés: **BE FR GB IT SE**

(73) Titulaire: **VEGLA VEREINIGTE GLASWERKE,
Viktoriaallee 3-5, D-5100 Aachen (DE)**

(84) Etats contractants désignés: **DE**

(72) Inventeur: **Kraemer, Johannes, Reichenberger
Strasse 9, D-7120 Bietigheim-Biss (DE)**
Inventeur: **Leclere, Klemens, Dr Molly Strasse 48, Neu
Moresnet (BE)**
Inventeur: **Nuding, Werner,
Hermann-Rombachstrasse 6, D-7120 Bietigheim-Biss
(DE)**
Inventeur: **Schilde, Heinz-Josef, Salmanusstrasse 40,
D-5120 Wuerselen (DE)**

(74) Mandataire: **Muller, René et al, SAINT-GOBAIN
RECHERCHE 39, quai Lucien Lefranc,
F-93304 Aubervilliers (FR)**

ACTORUM AG

## Description

La présente invention concerne un dispositif pour assembler par calandrage au moins une feuille de verre et au moins une pellicule de matière plastique comportant une série de rouleaux de pression montés de manière souple les uns à côté des autres et une série de rouleaux de contre-pression montés de manière souple et coopérant avec les rouleaux de pression, étant entendu que les rouleaux de pression et les rouleaux de contre-pression sont montés chaque fois à l'extrémité d'une tige de piston dont l'autre extrémité porte chaque fois un piston de pression sollicité par une pression pneumatique et se déplaçant dans un caisson pneumatique.

Les dispositifs de calandrage de ce type s'utilisent en particulier dans la fabrication de vitrages d'automobiles en verre feuilleté, cintrés de manière cylindrique ou sphérique, et servent à calandrer les épaisseurs de verre et de matière plastique à réunir ou stratifier d'une manière telle que l'air occlus entre ces épaisseurs soit exprimé dans toute la mesure du possible et qu'une jonction temporaire réciproque des diverses épaisseurs soit obtenue. La position des rouleaux de pression individuels s'adapte, grâce à leur montage souple, à la forme particulière du vitrage feuilleté. La jonction finale des épaisseurs l'une à l'autre s'effectue, après l'opération de pressage préalable, au cours d'un procédé à l'autoclave impliquant une température et une pression plus élevées.

Dans le cas d'un dispositif de calandrage connu, du type précité (document US-PS 2 983-635), la pression requise est produite par des vérins pneumatiques dans lesquels le piston de pression est en contact direct avec la paroi interne du cylindre du vérin et assure de cette façon l'étanchéité de la chambre du cylindre dans laquelle la pression est introduite. Dans le cas de ce montage connu, par suite de la friction inévitablement produite, la mobilité des rouleaux de pression laisse à désirer et, en conséquence, le risque de bris est accru lors du calandrage du vitrage feuilleté. En raison de la friction du piston de pression dans le cylindre du vérin, il faut en effet, lors d'une modification de forme de la feuille de verre, tout d'abord utiliser une force relativement élevée, à savoir la force dite «d'arrachement» (différence de force de frottement entre la friction statique et la friction de glissement), de telle sorte que le piston surmonte la friction statique au niveau de la paroi du cylindre. La force d'arrachement requise pour des rouleaux de pression individuels peut, dans ce cas, prendre des valeurs qui dépassent la contrainte de flexion tolérable pour une feuille de verre, de sorte qu'elle entraîne le bris de la feuille de verre.

L'invention a pour but d'améliorer un dispositif de calandrage du type spécifié d'une manière telle que les forces de frottement qui s'exercent dans le système de guidage et de serrage des rouleaux de pression individuels soient diminuées et que les forces de positionnement ainsi nécessaires pour modifier la position des rouleaux de pression individuels soient notablement réduites.

Suivant l'invention, ce but est réalisé par le fait qu'entre chaque piston de pression et la paroi interne du caisson pneumatique qui l'entoure est prévue une distance empêchant tout contact direct entre le piston et la paroi interne du caisson pneumatique et que dans le caisson pneumatique, l'espace ou la chambre pouvant être mis sous pression est isolé du piston de pression par une membrane très élastique en une matière caoutchouteuse qui, sous l'effet de la pression, s'applique contre la face d'extrémité du piston de pression et, en obturant de manière étanche l'espace entre le piston et la paroi interne du caisson pneumatique, transmet la pression pneumatique au piston.

Dans le cas de la réalisation conforme à l'invention du dispositif, les pistons de pression individuels ne doivent remplir aucune fonction d'étanchéité à l'égard des parois qui l'entourent. En conséquence, aucune perte de friction ne se produit entre les surfaces du piston et une paroi de cylindre qui l'entoure de manière étanche. Au contraire, les parois de piston ne présentent pas de contact avec des surfaces d'étanchéité latérales, mais s'étendent librement dans le caisson pneumatique sans contact latéral avec d'autres surfaces.

Les pistons de pression ne doivent pas nécessairement avoir la forme de pistons proprement dits. Il suffit qu'ils aient, par exemple, la forme de simples plateaux de pression qui transmettent la pression exercée par la membrane sur les tiges de guidage portant les rouleaux de pression.

Des modes de réalisation préférés de l'invention sont définis par l'object des revendications 2 à 13. En particulier, suivant une première forme d'exécution de l'invention, chaque piston de pression individuel est monté dans son propre caisson pneumatique qui est pourvu d'une membrane très élastique qui n'agit que sur ce cylindre de pression disposé dans le caisson pneumatique. Un avantage d'un tel agencement réside dans le fait que la pression exercée par chaque tige de piston peut être réglée indépendamment de la pression exercée par les tiges de piston voisines. De cette façon, il est possible de régler, par exemple, une courbe de pression pour laquelle les paires de rouleaux de pression situées au milieu du système exercent une pression plus forte que les paires de rouleaux de pression latérales, ce qui permet le cas échéant de favoriser l'expression de l'air occlus entre les épaisseurs.

Suivant une autre forme d'exécution de l'invention, les pistons de pression de plusieurs rouleaux de pression et rouleaux de compression disposés les uns à côté des autres peuvent être montés sans contact mutuel dans un caisson pneumatique commun dont la membrane très élastique, qui ferme la chambre alimentée de pression, agit simultanément sur tous les pistons de pression disposés dans le caisson pneumatique commun. Dans le sillage de cette idée, on peut aussi réaliser le dispositif conforme à l'invention d'une manière telle que les pistons de pression de tous les rouleaux de pression disposés les uns à côté des autres, d'une part, et les pistons de pression de tous les rouleaux de contre-pression disposés les uns à côté des autres, d'autre part, soient montés dans un caisson pneumatique commun et que, dans le caisson pneumatique soit prévue une membrane très élastique agissant simultanément et en commun sur tous les pistons de pression. Un tel montage d'une part présente une structure simplifiée et d'autre part garantit d'une manière particulièrement simple que la même pression agisse sur tous les rouleaux de pression et de contre-pression. En outre, cet agencement a l'avantage que, à cause de la suppression des caissons pneumatiques individuels, les pistons de press on peuvent être disposés à plus courte distance l'un de l'autre de sorte que les rouleaux de pression peuvent de cette façon, être d'un type plus étroit, c'est-à-dire que, pour la même largeur du dispositif de calandrage, un plus grand nombre de rouleaux de pression peut être prévu.

Les rouleaux de pression peuvent être montés indifféremment dans n'importe quelle disposition spatiale. Si les rouleaux de pression d'une part et les rouleaux de contre-pression d'autre part, sont montés verticalement les uns au-dessus des autres de telle façon que les tiges de piston portant les rouleaux de pression soient guidées horizontalement, on obtient un système de calandrage dans lequel le vitrage feuilleté a assembler par calandrage traverse le système dans une position verticale. Un tel système est, par exemple, avantageux pour calandrer des feuilles de verre grandes et lourdes pour lesquelles, dans le cas d'une opération de calandrage horizontale, en raison du poids propre élevé des feuilles de verre, des difficultés peuvent surgir.

Des feuilles de verre plus petites, par exemple de la grandeur des pare-brise de véhicules automobiles, sont avantageusement calandrées dans une position horizontale de sorte que les rouleaux de pression d'une part et les rouleaux de contre-pression d'autre part, sont montés les uns à côté des autres dans une orientation horizontale et que les tiges de piston coulissent dans une direction essentiellement verticale. Dans le cas d'une telle disposition des rouleaux de pression pour laquelle les tiges de piston coulissent dans le sens vertical ou dans un sens essentiellement vertical, il peut être avantageux de compenser les composantes de force verticales provoquées par le poids propre des équipages coulissants des rouleaux de pression et/ou des rouleaux de contre-pression. Dans le cas d'une compensation pondérale exacte, il est possible que les rouleaux de pression restent dans la position en hauteur qu'ils occupent respectivement, ce qui facilite notablement par exemple l'opération d'insertion d'une feuille de verre cintrée ou cambrée entre les rouleaux de pression. Des ressorts pneumatiques à courbe caractéristique essentiellement linéaire conviennent particulièrement pour la compensation du poids propre des rouleaux de pression et/ou des rouleaux de contre-pression.

D'autres particularités et avantages de l'invention ressortiront de la description suivante de trois exemples de réalisation différents de dispositifs de calandrage conformes à l'invention.

Dans les dessins annexés:

la Fig. 1 est une vue en élévation de face d'un dispositif de calandrage conforme à l'invention comportant un caisson pneumatique commun pour tous les rouleaux de pression et un autre caisson pneumatique commun pour tous les rouleaux de contre-pression;

la Fig. 2 est une vue en élévation de côté en partie en coupe, du dispositif de calandrage représenté sur la Fig. 1;

la Fig. 3 est une vue en élévation de face du dispositif de calandrage conforme à l'invention pour lequel chaque tige de piston portant un rouleau de pression à une extrémité, s'engage dans un caisson pneumatique réglable séparé qui lui est propre;

la Fig. 3a est une vue, à plus grande échelle, d'un détail de la Fig. 3;

la Fig. 4 est une vue en élévation de côté, en partie en coupe, d'un dispositif de calandrage représenté sur la Fig. 3;

la Fig. 5 est une vue en élévation de face d'un autre dispositif de calandrage présentant la même structure de base, mais utilisant un corps cylindrique élastiquement déformable continu disposé en dessous des rouleaux de pression pour répartir uniformément la pression, et

la Fig. 6 est une vue en élévation de côté en partie en coupe du dispositif de calandrage représenté sur la Fig. 5.

Dans le cas des dispositifs de calandrage représentés aux dessins, les axes de rotation des rouleaux de pression 1, 2 sont orientés en substance horizontalement et les rouleaux de pression 1 ainsi que les rouleaux de contre-pression 2 coopérant avec ceux-ci sont disposés l'un au-dessus de l'autre. Le produit à stratifier par compression 3 est, dans ce cas, inséré dans une position à peu près horizontale entre les rouleaux de pression 1, 2. Il est cependant tout aussi possible d'utiliser un système dans lequel les axes de rotation des rouleaux de pression s'étendent verticalement ou sous un autre angle de telle sorte que le produit à stratifier par compression soit inséré dans une position verticale ou dans une autre position angulaire entre les rouleaux de pression, si, pour quelle que raison que ce soit, cet agencement s'avérait avantageux.

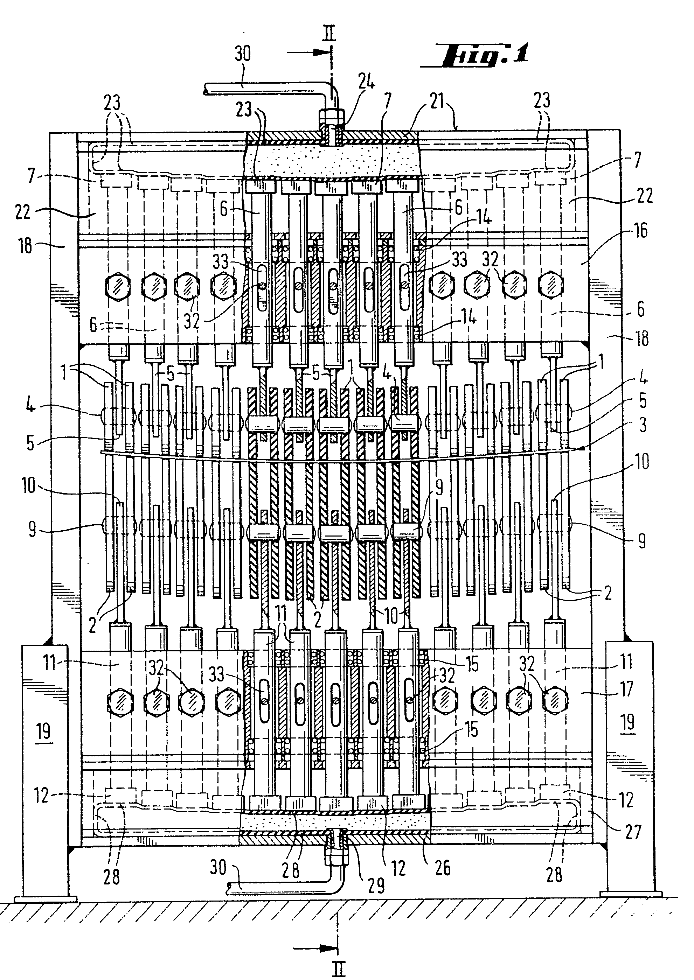

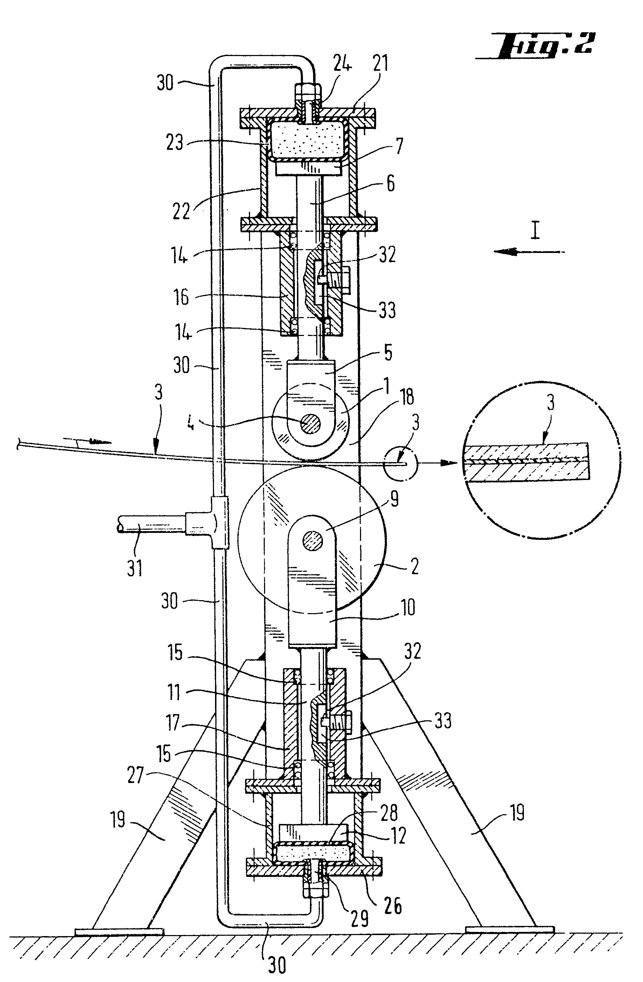

Dans le cas du dispositif de calandrage représenté sur les Fig. 1 et 2, les rouleaux de pression supérieurs 1 sont montés chaque fois par paires sur un axe de rotation 4. L'axe de rotation 4 est fixé en son milieu dans une lame de support 5 qui porte chaque demi-axe ou tourillon d'un rouleau de pression 1. La lame de support 5 est orientée verticalement et est montée sur une tige verticale, à savoir une tige de piston 6. A l'extrémité supérieure de la tige de piston 6 est monté le piston de pression ayant la forme d'un plateau de pression 7. Les rouleaux de contre-pression 2 sont montés d'une manière analogue par le fait que deux rouleaux de contre-pression 2 sont montés sur un court bout d'axe commun 9 qui est fixé en son milieu dans une lame de support 10. La lame de support 10 est fixée à une sorte de tige de piston 11 qui porte, à son extrémité inférieure, à la manière d'un piston, un plateau de pression 12.

Les tiges de piston 6 et 11 sont, par exemple, empêchées de tourner par une vis 32 et un écrou 33 et sont montées à coulissement très libre dans des douilles de guidage à billes 14, 15. Les douilles de guidage à billes 14 pour les tiges de piston 6 des rouleaux de pression sont montées dans un boîtier commun 16. D'une manière analogue, les douilles de guidage à billes 15 pour les tiges de piston 11 des rouleaux de contrepression sont montés dans un boîtier commun 17. Les deux boîtiers 16, 17 sont fixés à des montants verticaux communs 18 qui, pour leur part, sont respectivement pourvus de pieds 19.

Un caisson pneumatique 22 fermé par une plaque de fermeture 21 se raccorde au boîtier 16 recevant les douilles à billes 14 et est boulonné à ce boîtier 16. Dans ce caisson pneumatique 22 s'étendent les tiges de piston 6 de tous les rouleaux de pression 2. Entre les plateaux de pression 7 montés sur ces tiges de piston 6 et la plaque de fermeture 21, à l'intérieur du caisson 22, est monté un corps creux clos 23 en forme de boyau souple et en un caoutchouc très élastique. Au lieu d'être formée par un boyau flexible, la chambre qui est mise sous pression peut également être formée par la plaque de fermeture 21 et une membrane en caoutchouc qui est pincée de manière étanche entre le caisson 22 et la plaque de fermeture 21. Le boyau 23 est raccordé à une tubulure de raccordement 24 pour l'admission de l'air comprimé. Sous l'effet de l'air comprimé, le boyau souple 23 se dilate, s'applique contre tous les plateaux de pression 7 disposés les uns à côté des autres et exerce la même pression sur tous les plateaux de pression 7.

Les rouleaux de contre-pression 2 sont aussi sollicités par une pression d'une manière analogue aux rouleaux de pression 1. Le caisson pneumatique 27 fermé par la plaque 26 se raccorde au boîtier 17 qui porte les douilles de guidage à billes 15 pour les tiges de piston 11 portant les rouleaux de contre-pression 2. Les tiges de guidage II pourvues des plateaux de pression 12 s'étendent dans ce caisson pneumatique 27. Entre les plateaux de pression 12 et la plaque 26 est monté, à l'intérieur du caisson pneumatique 27, un corps creux clos 28 en forme de boyau souple et en caoutchouc très élastique. Le boyau 28 est relié à un raccord 29. Un tuyau 30 raccorde les deux raccords d'alimentation 24 et 29 et ainsi les deux boyaux creux 23 et 28 l'un à l'autre de sorte qu'une égalisation de pression s'établit continuellement entre eux. Le tuyau 30 est raccordé par l'intermédiaire de la conduite 31 à une source d'air comprimé réglable.

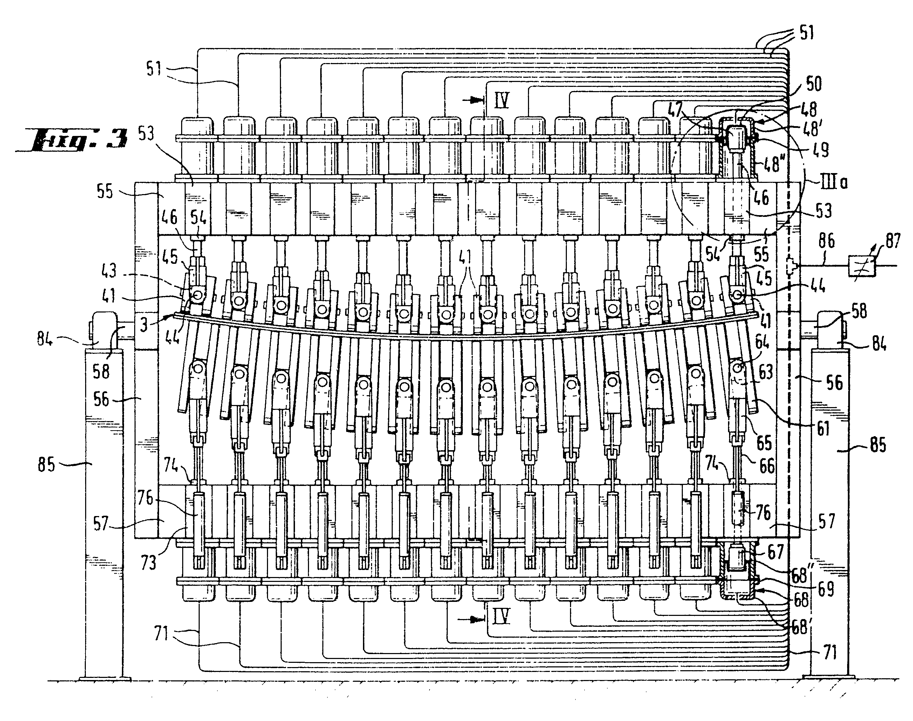

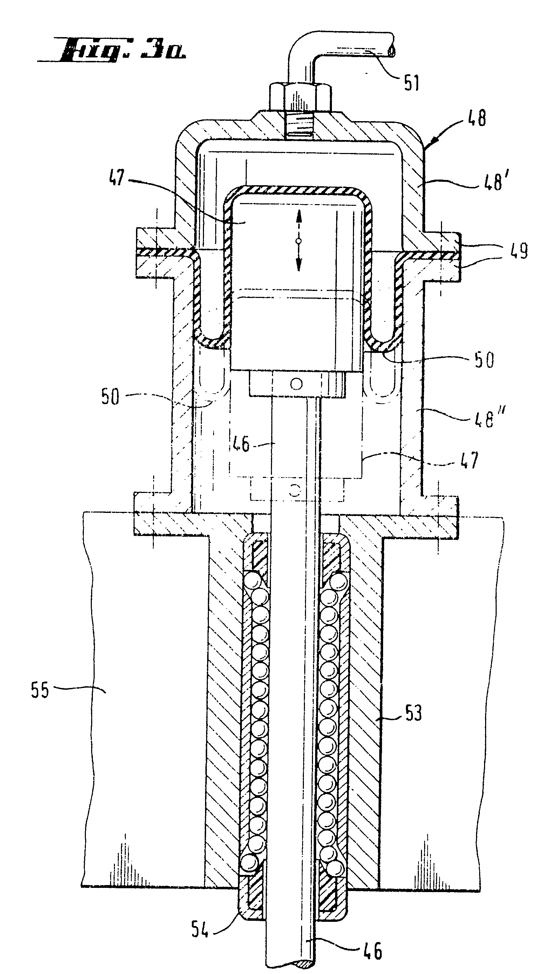

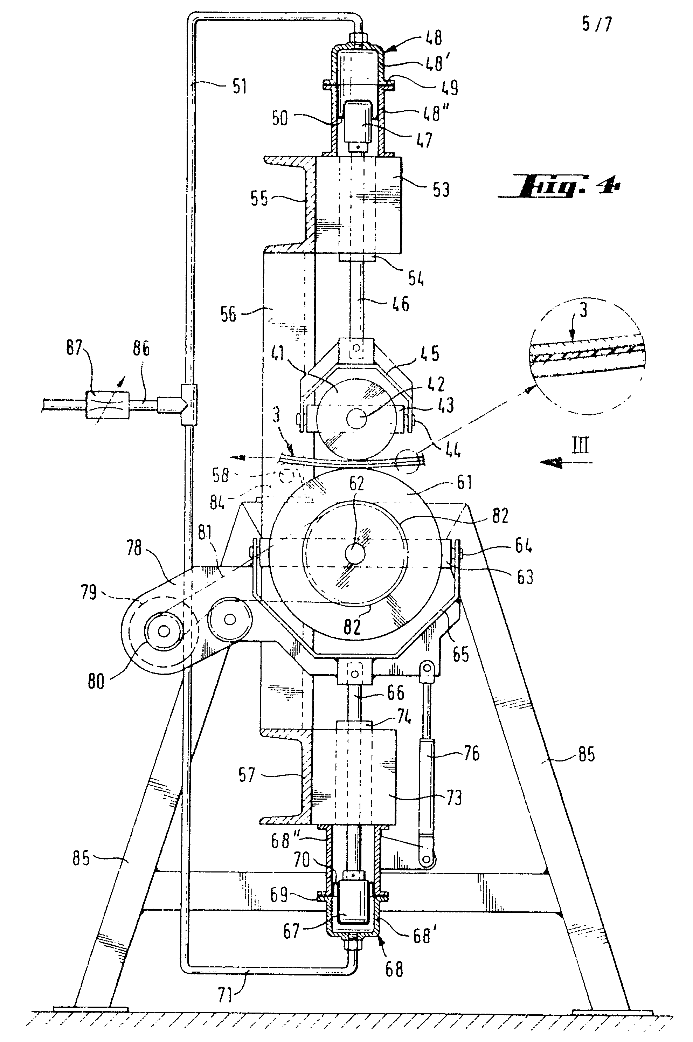

Dans le cas du dispositif de calandrage illustré sur les Fig. 3 et 4, les rouleaux de pression 41 sont montés à rotation autour d'axes 42 qui pour leur part sont montés chacun dans une pièce de tourillonnement 43. Cette pièce de tourillonnement 43 est pour sa part montée à rotation autour d'un axe 44. L'axe 44 est monté dans une chape de support 45. La chape de support 45 est montée à l'extrémité inférieure de la tige de piston 46. Un piston 47 est monté sur l'extrémité supérieure de la tige de piston 46 et se déplace vers le haut et vers le bas à l'intérieur du caisson pneumatique 48 qui a la forme d'un cylindre de pression. Le caisson pneumatique 48 est formé de deux parties 48' et 48'' qui sont boulonnées l'une à l'autre par l'intermédiaire d'un assemblage à brides 49. Entre les deux brides de l'assemblage 49 est pincée une membrane caoutchouteuse 50. La pression pneumatique introduite par la conduite de pression 51 dans le caisson pneumatique 48 agit sur la membrane 50 qui transmet la pression au piston 47.

Comme le montre en particulier la Fig. 3a, en lieu et place d'une membrane 50 bien tendue qui se dilate sous l'effet de la pression, on peut aussi utiliser une membrane 50' en une matière caoutchouteuse très souple d'une forme et d'une dimension telles qu'aucune dilatation de la membrane ne soit nécessaire, cette membrane 50' étant en effet pliée sur elle-même en dessous du plan de pinçage et, lors d'un déplacement du piston, se déroulant en quelque sorte entre le piston et la paroi interne du caisson pneumatique. Dans ce cas, la distance entre la surface du piston et la paroi interne du cylindre doit être telle que, lors de cette opération de déroulement, les surfaces de la membrane 50' qui se déplacent en regard l'une de l'autre, ne se touchent pas. Grâce à cette opération de déroulement de la membrane 50', on évite également toute friction entre les surfaces qui se déplacent l'une par rapport à l'autre.

Le caisson pneumatique 48 est fixé sur une console 53 qui forme également le support pour une douille de guidage à billes 54. Dans cette douille de guidage à billes 54 la tige de piston 46 coulisse avec un minimum de perte par friction. La tige de piston 46 est empêchée d'une manière adéquate de tourner autour de son axe. Les consoles individuelles 53 sont disposées les unes à côté des autres sur une traverse de support horizontale 55 qui, en compagnie des montants verticaux 56 et de la traverse de support horizontale inférieure 57, forme le bâti de la machine qui est monté à pivot dans son ensemble autour des axes horizontaux 58.

Les rouleaux de contre-pression 61 sont montés d'une manière comparable. Leurs axes de rotation 62 sont montés dans une pièce de tourillonnement 63 qui, pour sa part, est montée à rotation autour de l'axe 64 dans la chape 65. La chape 65 est fixée à l'extrémité supérieure de la tige de piston 66 dont l'extrémité inférieure porte le piston 67. Le piston 67 se déplace dans le sens vertical à l'intérieur du caisson pneumatique 68 qui a à nouveau la forme d'un cylindre de pression et qui est constitué de deux parties 68' et 68'' reliées par un assemblage 69. Entre les deux brides de l'assemblage 69 est pincée une membrane très élastique fortement extensible 70 qui transmet au piston 67 la pression pneumatique amenée dans le caisson pneumatique 68 par la conduite d'alimentation 71. Le diamètre du piston 67 est à nouveau plus petit que le diamètre intérieur du caisson pneumatique 68 et ce, dans une mesure telle qu'en dépit de l'intercalation de la membrane 70 entre le piston et la paroi interne du cylindre de pression 68, un déplacement sans friction du piston 67 à l'intérieur du cylindre de pression 68 soit possible. Le cylindre de pression 68 est monté sur une console 73 qui forme en même temps le support de montage pour la douille de guidage à billes 74 dans laquelle la tige de piston 68 coulisse sans friction et sans pouvoir tourner autour de son axe. Les consoles 73 sont montées les unes à côté des autres sur la traverse de support horizontale 57 du bâti de machine pouvant pivoter.

Sous l'effet de leur poids propre, les équipages mobiles dans le sens vertical qui portent le rouleau de pression 41 et le rouleau de contre-pression 42 occuperaient toujours une position d'extrémité inférieure aussi longtemps qu'ils ne sont pas soulevés dans une position supérieure par le produit à stratifier par calandrage 3 lui-même. Après le passage d'un produit à stratifier 3, ils descendraient donc tous dans leur position d'extrémité inférieure et devraient être remontés partiellement par la feuille de verre rigide du produit à stratifier 3. De cette façon, des forces de cintrage supplémentaires agiraient sur la feuille de verre. Pour éviter de soumettre la feuille de verre à de telles sollicitations, un ressort pneumatique 76 est monté entre la chape 65 et la console 73, ce ressort étant dimensionné ou réglé d'une manière telle que le poids propre des équipages mobiles soit compensé. On utilise avantageusement un ressort pneumatique 73 à courbe caractéristique linéaire. Grâce à la présence du ressort pneumatique 76, les forces de réglage dans le cas d'un changement de position des rouleaux de pression sont extrêmement faibles, de sorte que l'adaptation de la position en hauteur des rouleaux de pression à la forme de la feuille de verre s'effectue uniquement à l'intervention de la feuille de verre introduite entre les rouleaux et n'exige aucune mesure d'ajustement supplémentaire. Après le passage de la feuille de verre entre les paires de rouleaux, les rouleaux de pression restent dans la position en hauteur qu'ils occupaient sous l'action de la feuille de verre soulevée.

Parmi les rouleaux de contre-pression 61, certains, par exemple deux d'entre eux, sont entraînés pour transporter le produit à stratifier par calandrage 3 entre les rouleaux de pression. La réalisation d'un tel mécanisme d'entraînement en rotation est illustrée sur la Fig. 4. Une plaque de support 78 est montée à cet effet sur la chape 65 et porte un moteur d'entraînement 79. La roue dentée d'entraînement 80 entraîne une chaîne d'entraînement 81 qui transmet le mouvement de rotation à une roue dentée 82 montée coaxialement sur le rouleau de contre-pression 61 et reliée rigidement à celui-ci.

Les paliers 84 portant les axes de pivotement 58 du bâti de la machine sont montés sur des socles adéquats qui, dans l'exemple représenté, sont chaque fois constitués par un chevalet 85.

Le tampon de pression 51 aboutissant à un cylindre de pression 48 est raccordé directement au tuyau de pression 71 qui aboutit au cylindre de pression 68 coopérant avec le cylindre de pression 48 de sorte que la même pression pneumatique agit toujours précisément sur le rouleau de pression 41 et sur le rouleau de contre-pression 61 coopérant avec celui-ci. Dans la conduite de pression 86 alimentant les tuyaux de pression 51 et 71 au moyen d'air comprimé est disposée une valve réductrice de pression 87 au moyen de laquelle la pression peut être réglée. Il en va de même pour tous les rouleaux de pression et de contre-pression disposés les uns à côté des autres. De cette façon, la pression régnant dans chacun des deux équipages de rouleau de pression agissant en opposition l'un à l'autre peut être réglée indépendamment des équipages de rouleaux de pression voisins, de sorte que des pressions de compression différentes peuvent être réglées sur la largeur du dispositif de calandrage.

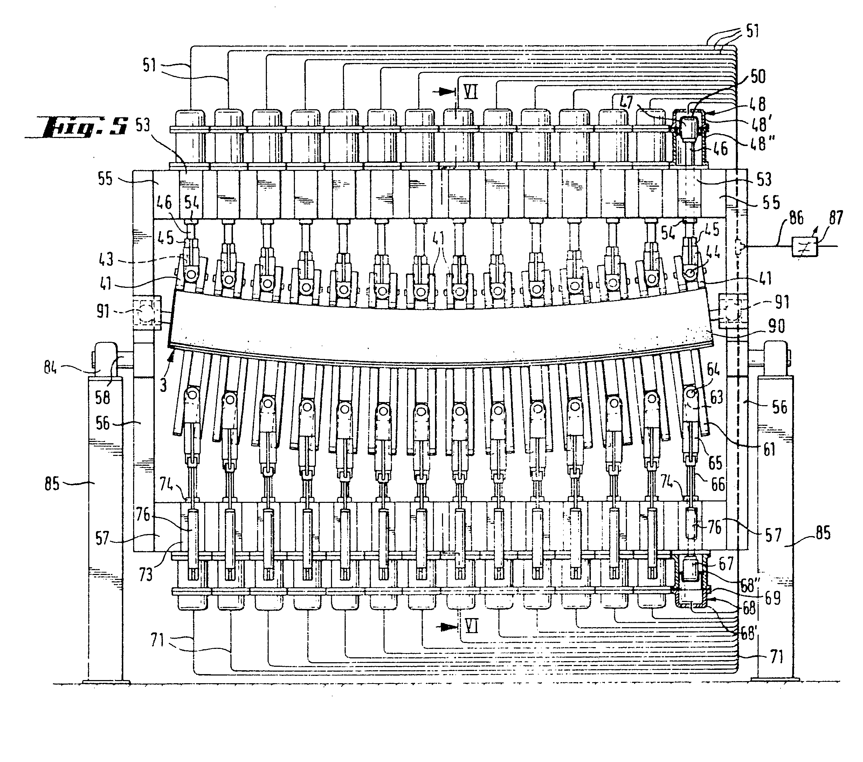

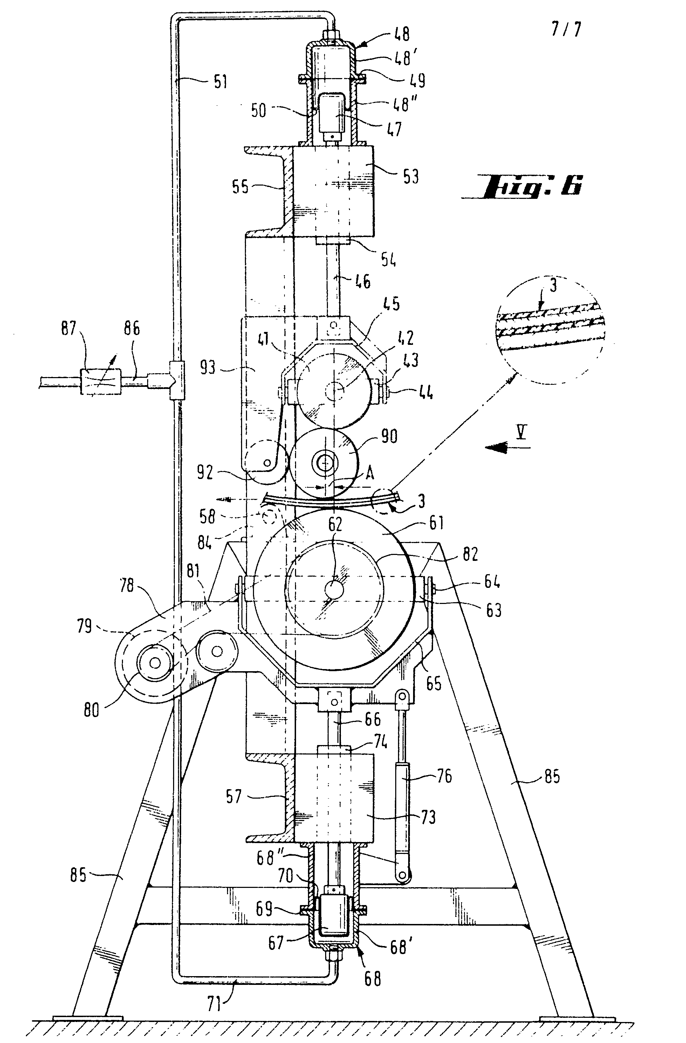

Le dispositif de calandrage illustré sur les Fig. 5 et 6 est construit précisément comme celui illustré sur les Fig. 3 et 4 en ce qui concerne l'agencement et le montage des rouleaux de pression 41 et des rouleaux de contre-pression 61, la configuration des pistons 47 et 67, les cylindres de pression 48 et 68, les membranes 50 et 70 ainsi que la compensation pondérale à l'intervention des ressorts pneumatiques 76 et l'entraînement en rotation à l'intervention du moteur d'entraînement 79. L'amenée de la pression aux cylindres de pression 48 et 68 par l'intermédiaire de la conduite et des tuyaux de pression 86, 51 et 71 s'effectue également de la même manière, la pression pneumatique pouvant être réglée à une valeur souhaitée dans chacun des deux équipages travaillant en opposition l'un à l'autre indépendamment des systèmes voisins chaque fois au moyen d'une valve réductrice de pression 87.

Contrairement aux formes d'exécution décrites plus haut, les rouleaux de pression 41 n'agissent cependant pas directement sur le produit à stratifier 3 mais un corps cylindrique continu 90 est intercalé entre les rouleaux de pression 41 et le produit à stratifier 3. Le corps cylindrique 90 est fait d'une matière élastiquement déformable dont le pouvoir de déformation élastique est si grand qu'il peut convenablement s'adapter à la forme de la feuille de verre. Le corps cylindrique 90 est maintenu à ses deux extrémités de manière à ne pas pouvoir coulisser latéralement par des paliers de butée 91 adéquats. Pour le reste, il est monté sans serrage et est maintenu dans sa position par des rouleaux d'appui 92 qui sont montés à rotation à l'arrière du dispositif de calandrage sur des bras de support 93 qui pour leur part sont montés sur les chapes 45 portant les rouleaux de pression 41. Les rouleaux d'appui 92 sont dimensionnés et disposés de telle sorte que l'axe central du corps cylindrique 90 soit décalé de la distance A derrière le plan qui est déterminé par les axes de rotation 42 et 62 des rouleaux de pression et des rouleaux de contre-pression. On obtient ainsi un placement stable du corps cylindrique 90.

Le corps cylindrique 90 sert à uniformiser les forces de pression exercées par les rouleaux de pression 41 sur le produit à stratifier 3 d'une manière telle qu'une pression superficielle plus uniforme soit exercée sur ce produit. Ceci est particulièrement intéressant lorsque le produit à stratifier 3 est constitué d'une feuille de verre ou d'une plaque ou pellicule en matière plastique sur laquelle une couche de matière plastique relativement tendre doit être appliquée à titre de couche extérieure anti-éclats ou, dans le cas d'un substrat en matière plastique, à titre de couche de recouvrement améliorant la résistance aux griffes et aux rayures.

## Revendications

1. Dispositif pour assembler par calandrage au moins une feuille de verre et au moins une pellicule de matière plastique, comportant une série de rouleaux de pression montés de manière souple les uns à côté des autres et une série de rouleaux de contre-pression montés de manière souple et coopérant avec les rouleaux de pression, les rouleaux de pression et les rouleaux de contre-pression étant montés à l'extrémité d'une tige de piston dont l'autre extrémité porte un piston de pression sollicité par une pression pneumatique et se déplaçant dans un caisson pneumatique, caractérisé en ce qu'entre chaque piston de pression (7, 12; 47, 67) et la paroi interne du caisson pneumatique (22, 27; 48, 68) qui l'entoure est prévu un espace empêchant tout contact direct entre le piston et la paroi interne du caisson pneumatique et, dans le caisson pneumatique (22, 27; 48, 68), l'espace pouvant être mis sous pression est fermé du côté piston de pression (7, 12; 47, 67) par une membrane très élastique (23, 28; 50, 70) en une matière caoutchouteuse qui, sous l'effet de la pression, s'applique contre la face d'extrémité du piston de pression (7, 12; 47, 57) et, en obturant de manière étanche l'espace entre le piston et la paroi interne du caisson pneumatique, transmet la pression pneumatique au piston (7, 12; 47, 67).

2. Dispositif suivant la revendication 1, caractérisé en ce que chaque piston de pression (47, 67) est monté dans un caisson pneumatique (48, 68) qui lui est propre avec une membrane (50, 70) qui n'agit que sur ce piston de pression.

3. Dispositif suivant la revendication 1, caractérisé en ce que les pistons de pression de plusieurs rouleaux de pression et de contre-pression, disposés les uns à côté des autres, sont montés sans contact réciproque dans un caisson pneumatique commun dont la membrane très élastique qui ferme l'espace pouvant être mis sous pression agit, simultanément sur les pistons de pression montés dans le caisson pneumatique commun.

4. Dispositif suivant la revendication 1, caractérisé en ce les pistons de pression (7) de tous les rouleaux de pression (1) disposés les uns à côté des autres et les pistons de pression (12) de tous les rouleaux de contre-pression (2) disposés les uns à côté des autres sont montés chaque fois dans un caisson pneumatique commun (22, 27) et une membrane très élastique commune (23, 28) agissant simultanément sur tous les pistons de pression (7, 12) est chaque fois prévue.

5. Dispositif suivant la revendication 2, 3, 4, caractérisé en ce que la membrane très élastique est faite d'un corps creux élastique, en particulier d'un corps creux en forme de boyau (28), monté dans le caisson pneumatique (22, 27) entre les faces d'extrémité des pistons de pression (7, 12) et la paroi du caisson pneumatique (22, 27).

6. Dispositif suivant la revendication 2 ou 3, caractérisé en ce que les caissons pneumatiques (48, 68) peuvent être alimentés au moyen d'une pression pneumatique pouvant chaque fois être réglée indépendamment des caissons pneumatiques voisins.

7. Dispositif suivant l'une quelconque des revendications 1 à 6, caractérisé en ce que les caissons pneumatiques (22, 48) des rouleaux de pression (1, 41) et les caissons pneumatiques (27, 68) des rouleaux de contre-pression (2, 61) sont raccordés l'un à l'autre par des conduites d'égalisation de pression.

8. Dispositif suivant l'une quelconque des revendications 1 à 7, caractérisé en ce que la composante de force verticale produite par le poids propre des rouleaux de pression (1, 41) et/ou des rouleaux de contre-pression (2, 61) y inclus celui du système de guidage mobile respectivement associé est compensée.

9. Dispositif suivant la revendication 8, caractérisé en ce que pour compenser le poids propre d'un rouleau de pression (1, 41) et/ou d'un rouleau de contre-pression (2, 61), on utilise un ressort pneumatique (76) à caractéristique essentiellement linéaire qui agit sur le rouleau de pression et/ou sur le rouleau de contre-pression.

10. Dispositif suivant l'une quelconque des revendications 1 à 9, caractérisé en ce que les tiges de piston (6, 11; 46, 66) sont montées sans friction dans des douilles de guidage à billes (14, 15; 54, 74).

11. Dispositif suivant l'une quelconque des revendications 1 à 10, caractérisé en ce que les tiges de piston (6, 11; 46, 66) sont montées d'une manière empêchant toute torsion.

12. Dispositif suivant l'une quelconque des revendications 1 à 11, caractérisé en ce qu'au moins deux rouleaux de pression et/ou deux rouleaux de contre-pression sont équipés d'un mécanisme d'entraînement en rotation (79, 80, 81, 82).

13. Dispositif suivant l'une quelconque des revendications 1 à 12, caractérisé en ce qu'entre les rouleaux de pression et les rouleaux de contre-pression est intercalé un corps cylindrique (90) en une matière élastiquement déformable qui s'étend sur toute la largeur de travail du dispositif de calandrage, qui est déformable et qui s'adapte à la courbure de la feuille de verre (3).

## Patentansprüche

1. Vorrichtung zum Zusammenwalzen von wenigstens einer Glasscheibe und wenigstens einer Kunststoffolie, mit einer Reihe von nachgiebig gelagerten nebeneinander angeordneten Druckrollen und einer Reihe von nachgiebig gelagerten und mit den Druckrollen zusammenwirkenden Gegendruckrollen, wobei die Druckrollen und die Gegendruckrollen jeweils am Ende einer Kolbenstange angeordnet sind, an deren anderem Ende ein mit pneumatischem Druck beaufschlagter und sich in einem pneumatischen Gehäuse verschiebender Druckkolben angeordnet ist, dadurch gekennzeichnet, dass zwischen jedem Druckkolben (7, 12; 47, 67) und der Innenwand des diesen umgebenden pneumatischen Gehäuses (22, 27; 48, 68) ein den direkten Kontakt zwischen dem Druckkolben und der Innenwand des pneumatischen Gehäuses verhindernder Zwischenraum vorgesehen ist, und dass in dem pneumatischen Gehäuse (22, 27; 48, 68) der unter Überdruck setzbare Zwischenraum auf der Seite des Druckkolbens (7, 12; 47, 67) durch eine hochelastische Membran (23, 28; 50, 70) abgeschlossen ist, die sich unter der Wirkung des Überdrucks an die Stirnfläche des Druckkolbens (7, 17; 47, 57) anlegt und unter dichtem Abschluss des Zwischenraums zwischen dem Druckkolben und der Innenwand des pneumatischen Gehäuses den pneumatischen Druck auf den Druckkolben (7, 12; 47, 67) überträgt.

2. Vorrichtung nach Anspruch 1, dadurch gekennzeichnet, dass jeder Druckkolben (47, 67) in einem eigenen pneumatischen Gehäuse (48, 68) gelagert ist, das mit einer Membran (50, 70) versehen ist, die nur auf diesen Druckkolben einwirkt.

3. Vorrichtung nach Anspruch 1, dadurch gekennzeichnet, dass die Druckkolben mehrerer nebeneinander angeordneter Druckrollen bzw. Gegendruckrollen ohne gegenseitigen Kontakt in einem gemeisamen pneumatischen Gehäuse angeordnet sind, dessen hochelastische, den Zwischenraum abschliessende und unter Überdruck setzbare Membran gleichzeitig auf die in dem pneumatischen Gehäuse angeordneten Druckkolben einwirkt.

4. Vorrichtung nach Anspruch 1, dadurch gekennzeichnet, dass die Druckkolben (7) aller nebeneinander angeordneter Druckrollen (1) und die Druckkolben (12) aller nebeneinander angeordneter Gegendruckrollen (2) jeweils in einem gemeinsamen pneumatischen Gehäuse (22, 27) gelagert sind, und dass jeweils eine gemeinsame hochelastische Membran (23, 28) vorgesehen ist, die gleichzeitig auf alle Druckkolben (7, 12) einwirkt.

5. Vorrichtung nach Anspruch 2, 3 und 4, dadurch gekennzeichnet, dass die hochelastische Membran aus einem elastischen Hohlkörper, insbesondere aus einem schlauchförmigen Hohlkörper (28) besteht, der zwischen den Stirnseiten der Druckkolben (7, 12) und der Wand des pneumatischen Gehäuses (22, 27) angeordnet ist.

6. Vorrichtung nach Anspruch 2 oder 3, dadurch gekennzeichnet, dass die pneumatischen Gehäuse (48, 68) der jeweils unabhängig von dem pneumatischen Druck der benachbarten pneumatischen Gehäuse regelbar ist.

7. Vorrichtung nach Ansprüche 1 bis 6, dadurch gekennzeichnet, dass die pneumatischen Gehäuse (22, 48) der Druckrollen (1, 41) und die pneumatischen Gehäuse (27, 68) der Gegendruckrollen (2, 61) durch Druckausgleichsleitungen miteinander verbunden sind.

8. Vorrichtung nach Ansprüche 1 bis 7, dadurch gekennzeichnet, dass die durch das Eigengewicht der Druckrollen (1, 41) und/oder der Gegendruckrollen (2, 61) einschliesslich des Eigengewichts des jeweils hiermit verbundenen beweglichen Führungssystems hervorgerufene vertikale Kraftkomponente kompensiert wird.

9. Vorrichtung nach Anspruch 8, dadurch gekennzeichnet, dass zur Kompensation des Eigengewichts einer Druckrolle (1, 41) und/oder einer Gegendruckrolle (2, 61) eine pneumatische Feder (76) mit im wesentlichen linearer Charakteristik verwendet wird, die auf die Druckrolle und/oder die Gegendruckrolle einwirkt.

10. Vorrichtung nach einem der Ansprüche 1 bis 9, dadurch gekennzeichnet, dass die Kolbenstangen (6, 11; 46, 66) reibungslos in Kugelführungsbuchsen (14, 15; 54, 74) gelagert sind.

11. Vorrichtung nach einem der Ansprüche 1 bis 11, dadurch gekennzeichnet, dass die Kolbenstangen (6, 11; 46, 66) verdrehsicher gelagert sind.

12. Vorrichtung nach einem der Ansprüche 1 bis 11, dadurch gekennzeichnet, dass wenigstens zwei Druckrollen und/oder Gegendruckrollen mit einer Einrichtung (79, 80, 81, 82) für den Rotationsantrieb versehen sind.

13. Vorrichtung nach einem der Ansprüche 1 bis 12, dadurch gekennzeichnet, dass zwischen den Druckrollen und den Gegendruckrollen ein zylindrischer Körper (90) aus elastisch verformbarem Material zwischengeschaltet ist, der sich über die gesamte Arbeitsbreite der Walzvorrichtung erstreckt und sich unter Verformung der Biegung der Glasscheibe (3) anpasst.

**Claims**

1. Apparatus for assembling by calendering at least one glass sheet and at least one plastics material film, comprising a series of pressure rollers mounted in flexible juxtaposed manner and a series of backpressure rollers mounted flexibly and cooperating with the pressure rollers, the pressure rollers and the backpressure rollers being mounted at the end of a piston rod, whose other end carries a pressure piston subject to the action of a pneumatic pressure and moving in a pneumatic chamber, characterized in that between each pressure piston (7, 12; 47, 67) and the inner wall of the pneumatic chamber (22, 27; 48, 68) surrounding it is providing it is providing a space preventing any direct contact between the piston and the inner wall of the pneumatic chamber and, in the pneumatic chamber (22, 27; 48, 68), the space can be pressurized and is sealed on the pressure piston side (7, 12; 47, 67) by a very elastic diaphragm (23, 28; 50, 70) made from a rubbery material which, under the effect of the pressure, is applied to the end face of the pressure piston (7, 12; 47, 67) and, whilst tightly sealing the space between the piston and the inner wall of the pneumatic chamber, transmits the pneumatic pressure to the piston (7, 12; 47, 67).

2. Apparatus according to claim 1, characterized in that each pressure piston (47, 67) is fitted in a pneumatic chamber (48, 68) belonging to it with a diaphragm (50, 70) which only acts on said pressure piston.

3. Apparatus according to claim 1, characterized in that the pressure pistons of several pressure and backpressure rollers arranged in juxtaposed manner are fitted in reciprocal contact in a common pneumatic chamber, whereof the very elastic diaphragm sealing the space and which can be placed under pressure acts simultaneously on the pressure pistons mounted in the common pneumatic chamber.

4. Apparatus according to claim 1, characterized in that the pressure piston (7) of all the juxtaposed pressure rollers (1) and the pressure piston (12) of all the juxtaposed backpressure rollers (2) are in each case installed in a common pneumatic chamber (22, 27) and on each occasion a very elastic common diaphragm (23, 28) is provided, which simultaneously acts on all the pressure pistons (7, 12).

5. Apparatus according to claims 2, 3 and 4, characterized in that the very elastic diaphragm is formed from a hollow elastic body, particularly a hose-shaped hollow body (28), installed in the pneumatic chamber (22, 27) between the end faces of the pressure pistons (7, 12) and the wall of the pneumatic chamber (22, 27).

6. Apparatus according to claims 2 or 3, characterized in that the pneumatic chambers (48, 68) can be supplied by means of a pneumatic pressure and can be regulated independently of the adjacent pneumatic chambers.

7. Apparatus according to any one of the claims 1 to 6, characterized in that the pneumatic chambers (22, 48) of the pressure rollers (1, 41) and the pneumatic chambers (27, 68) of the backpressure rollers (2, 61) are connected to one another by pressure equalizing pipes.

8. Apparatus according to any one of the claims 1 to 7, characterized in that the vertical force component produced by the weight of the pressure rollers (1, 41) and/or the backpressure rollers (2, 61), including that of the respectively associated mobile guidance system is compensated.

9. Apparatus according to claim 8, characterized in that for compensating the weight of a pressure roller (1, 41) and/or a backpressure roller (2, 61) use is made of a pneumatic spring (76) having an essentially linear characteristic, which acts on the pressure roller and/or on the backpressure roller.

10. Apparatus according to any one of the claims 1 to 9, characterized in that the piston rods (6, 11; 46, 66) are mounted in friction-free manner in ball guiding sleeves (14, 15; 54, 74).

11. Apparatus according to any one of the claims 1 to 10, characterized in that the piston rods (6, 11; 46, 66) are mounted so as to prevent any torsion.

·12. Apparatus according to any one of the claims 1 to 11, characterized in that at least two pressure rollers and/or two backpressure rollers are equipped with a rotating mechanism (79, 80. 81, 82).

13. Apparatus according to any one of the claims 1 to 12, characterized in that between the pressure rollers and the backpressure rollers is placed a cylindrical (90) made from an elastically deformable materil and which extends over the entire working width of the calendering device, which is deformable and which adapts to the curvature of the glass sheet (3).

**Fig.1**

**Fig.2**

Fig. 3

# Fig. 3a.

Fig. 4

Fig. 5

**_Fig. 6_**